(19) **Europäisches Patentamt**
**European Patent Office**
**Office européen des brevets**

(11) **EP 3 832 674 B1**

(12) **EUROPEAN PATENT SPECIFICATION**

(45) Date of publication and mention
of the grant of the patent:
**31.05.2023 Bulletin 2023/22**

(21) Application number: **19844978.7**

(22) Date of filing: **25.07.2019**

(51) International Patent Classification (IPC):
***H01C 7/00*** *(2006.01)*     ***C01G 55/00*** *(2006.01)*
***C03C 8/16*** *(2006.01)*

(52) Cooperative Patent Classification (CPC):
**C03C 8/14; C01G 55/004; C03C 3/064;**
**C03C 3/066; C03C 3/089; C03C 3/091;**
**C03C 3/093; C03C 8/02; C03C 8/04; H01C 7/003;**
**H01C 17/06533;** C01P 2002/60; C01P 2004/64;
H01C 7/06

(86) International application number:
**PCT/JP2019/029271**

(87) International publication number:
**WO 2020/026942 (06.02.2020 Gazette 2020/06)**

(54) **COMPOSITION FOR THICK FILM RESISTOR, PASTE FOR THICK FILM RESISTOR, AND THICK FILM RESISTOR**

ZUSAMMENSETZUNG FÜR DICKSCHICHTWIDERSTAND, PASTE FÜR DICKSCHICHTWIDERSTAND UND DICKSCHICHTWIDERSTAND

COMPOSITION DESTINÉE À UNE RÉSISTANCE À COUCHE ÉPAISSE, PÂTE DESTINÉE À UNE RÉSISTANCE À COUCHE ÉPAISSE, ET RÉSISTANCE À COUCHE ÉPAISSE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **31.07.2018 JP 2018144454**

(43) Date of publication of application:
**09.06.2021 Bulletin 2021/23**

(73) Proprietor: **SUMITOMO METAL MINING CO., LTD.**
**Tokyo**
**105-8716 (JP)**

(72) Inventors:
• **KAWAKUBO, Katsuhiro**
**Ome-shi, Tokyo 198-0025 (JP)**

• **MAKUTA, Fujio**
**Ome-shi, Tokyo 198-0025 (JP)**
• **OZAWA, Makoto**
**Ome-shi, Tokyo 198-0025 (JP)**

(74) Representative: **Jones, Nicholas Andrew**
**Withers & Rogers LLP**
**2 London Bridge**
**London SE1 9RA (GB)**

(56) References cited:
WO-A1-2012/176696    WO-A1-2018/074562
JP-A- 2007 103 594    JP-A- 2007 103 594
JP-A- 2018 067 478    JP-A1-WO2012 176 696

**Description**

TECHNICAL FIELD

The present invention relates to a composition for a thick film resistor, a paste for a thick film resistor, and a thick film resistor.

BACKGROUND ART

Generally, thick film resistors, such as chip resistors, hybrid ICs, or resistance networks, are formed by printing and firing a paste for a thick film resistor on a ceramic substrate. The paste used to form the thick film resistor may be composed of a ruthenium-based conductive particle represented by ruthenium oxide, and a glass powder.

The reason the composition containing ruthenium-based conductive particles and the glass powder are widely used as a raw material of the thick film resistor, is that the material can be fired in air and the resistance temperature coefficient (TCR) can be made close to 0. In addition, a thick film resistor with a wide resistance value can be formed.

When a thick film resistor is produced using a composition that includes ruthenium-based conductive particles and glass powder, the resistance value varies depending on the composition ratio. When the proportion of ruthenium-based conductive particles is increased, the resistance value decreases, and when the proportion of the ruthenium-based conductive particles is decreased, the resistance value increases. This is used to adjust the ratio of ruthenium-based conductive particles to glass powder to produce the desired resistance value in the thick film resistor.

The particular ruthenium-based conductive particles used in the raw composition of the thick film resistor include ruthenium oxide ($RuO_2$) having a rutile crystal structure and lead ruthenium acid ($Pb_2Ru_2O_{6.5}$) having a pyrochlore crystal structure. These are both metallic conductive oxides.

As for the glass powder used in the composition for the thick film resistor, glass having a softening point lower than the firing temperature of the paste for the thick film resistor was generally used, and glass containing lead oxide (PbO) was used. The reasons for this include that lead oxide (PbO) has the effect of lowering the softening point of glass; that the softening point changes over a wide range by changing the content of lead oxide (PbO); that glass with relatively high chemical durability can be produced; that insulation properties are high; and that voltage resistance is excellent.

In a composition for a thick film resistor including ruthenium-based conductive particles and glass powder, the resistance value is adjusted by increasing the amount of ruthenium-based conductive particles and decreasing the amount of glass powder when a low resistance value is desired, and decreasing the amount of ruthenium-based conductive particles and increasing the glass powder when a high resistance value is desired. In a thick film resistor having a low resistance value range in which a large amount of ruthenium-based conductive particles is included, the resistance temperature coefficient is likely to be positive, and in a thick film resistor having a high resistance value range in which a small amount of ruthenium-based conductive particles is included, the resistance temperature coefficient is likely to be negative.

The resistance temperature coefficient represents the change in the resistance value due to the change in temperature and is one of the important characteristics of the thick film resistor. Resistance temperature coefficients can be adjusted by primarily adding metal oxides, referred to as regulators, to the composition. It is relatively easy to adjust the resistance temperature coefficient to negative, and the adjustment agent includes manganese oxide, niobium oxide, titanium oxide, and the like. However, it is difficult to adjust the resistance temperature coefficient to positive, and it is virtually impossible to adjust the resistance temperature coefficient of the composition for the thick film resistor having the negative resistance temperature coefficient to around zero. Accordingly, in the region where the resistance value is high and the resistance temperature coefficient is likely to be negative, it is desirable to combine conductive particles and glass whose resistance temperature coefficient is positively high.

Lead ruthenium acid ($Pb_2Ru_2O_{6.5}$) has a higher resistivity than that of ruthenium oxide ($RuO_2$), and resistance temperature coefficient of the thick film resistor is likely to become higher than that of the thick film resistor. Therefore, lead ruthenium acid ($Pb_2Ru_2O_{6.5}$) has been used as a conductive particle in high resistance region.

Thus, conventional compositions for thick film resistors contain lead components in both conductive particles and glass. However, the lead component is undesirable from the viewpoint of the effect on the human body and pollution, and there is a strong need for the development of a composition for a thick film resistor that does not contain lead.

Accordingly, several compositions for thick film resistors that do not contain lead have been proposed (Patent Documents 1 to 4).

Patent Document 1 discloses a resistor paste containing at least a substantially lead-free glass composition and a substantially lead-free predetermined average particle diameter conductive material that is mixed with an organic vehicle. As the conductive materials, calcium ruthenium, strontium ruthenium, and barium ruthenium are listed.

According to Patent Document 1, the desired effect is obtained by setting the particle diameter of the electrically conductive material to be used in a predetermined range and securing a substantial particle diameter of the electrically conductive material except for the reaction phase.

In Patent Document 2, a method of manufacturing a resistor paste comprising the steps of: melting a first conductive material including a metallic element to provide electrical conductivity to a glass composition in advance to obtain a glass material; kneading the glass material, a second conductive material including the metallic element, and a vehicle, wherein the glass composition and the first and second conductive material do not contain lead. Then, $RuO_2$ and the like is listed as the first and second conductive material.

Patent Document 3 proposes a thick film paste composition comprising (a) a ruthenium-based conductive material and (b) a base solid of a predetermined composition of lead and cadmium-free glass composition, wherein all of (a) and (b) are dispersed in an organic medium. As a ruthenium-based conductive material, bismuth ruthenate is listed.

Patent Document 4 proposes a resistor composition comprising a ruthenium-based conductive component without a lead component, glass without a lead component having a base (Po value) of 0.4 to 0.9 of glass, and an organic vehicle, wherein crystals of $MSi_2Al_2O_8$ (M: Ba and/or Sr) are present in the thick film resistor obtained by firing at a high temperature. According to Patent Document 4, because the base of the glass is close to the base of the ruthenium complex oxide, the decomposition inhibition effect of the ruthenium complex oxide is great. In addition, it is said that it is possible to form a conductive network by depositing a predetermined crystalline phase in the glass.

Patent Document 5 discloses a resistor composition comprising a ruthenium oxide powder, a glass powder and a silica powder, with a different glass powder composition than in the invention.

PRIOR ART DOCUMENTS

PATENT DOCUMENTS

Patent Document 1: Japanese Laid-Open Patent Application Publication No. 2005-129806
Patent Document 2: Japanese Laid-Open Patent Application Publication No. 2003-7517
Patent Document 3: Japanese Laid-Open Patent Application Publication No. 8-253342
Patent Document 4: Japanese Laid-Open Patent Application Publication No. 2007-103594
Patent Document 5: JP 2018067478 A

SUMMARY OF THE INVENTION

PROBLEMS TO BE SOLVED BY THE INVENTION

However, the technique disclosed in Patent Document 1 did not improve the resistance temperature coefficient. In addition, there has been a problem that using the conductive particles having a large particle diameter results in a large current noise of the formed resistor, and that a preferable load characteristic is not obtained.

In the technique disclosed in Patent Document 2, there has been a problem that the amount of ruthenium oxide dissolved in the glass varies greatly depending on the manufacturing conditions, and the properties of the resistance value and the resistance temperature coefficient are not stable.

In the thick film paste composition disclosed in Patent Document 3, the resistance temperature coefficient increased to negative and the resistance temperature coefficient could not be made close to zero.

Patent Document 4 assumes the use of ruthenium compound oxide as the conductive particle, and does not specifically study the use of ruthenium oxide capable of being obtained industrially more easily than the ruthenium compound oxide. In addition, the influence of the glass composition on the resistance temperature coefficient of the resistor has not been investigated.

In view of the above prior art problems, the present invention is intended to provide a composition for a thick film resistor that does not contain a lead component and is excellent in resistance temperature coefficient and noise characteristics.

MEANS FOR SOLVING THE PROBLEM

In order to solve the above problem, the present invention provides a composition for a thick film resistor according to claim 1.

ADVANTAGEOUS EFFECT OF THE INVENTION

According to one aspect of the present invention, a composition for a thick film resistor can be provided that does not contain a lead component and is excellent in resistance temperature coefficient and noise characteristics.

MODE OF CARRYING OUT THE INVENTION

Hereinafter, an embodiment of a composition for a thick film resistor, a paste for a thick film resistor, and a thick film resistor of the present invention will be described.

[Composition for Thick Film Resistor]

The thick film resistor composition of this embodiment is free of lead components and includes ruthenium oxide powder, glass powder, and silica powder.

The glass powder may contain $SiO_2$, $B_2O_3$ and RO. The R in RO represents one or more alkaline earth elements selected from Ca, Sr, and Ba. When the total content of $SiO_2$, $B_2O_3$, and RO is 100 parts by mass, it is preferable that the glass powder contain 10 parts by mass to 50 parts by mass of $SiO_2$, 8 parts by mass to 30 parts by mass of $B_2O_3$, and 40 parts by mass to 65 parts by mass of RO.

The silica powder may be amorphous silica powder having a specific surface area of not less than 60 $m^2/g$ and not more than 300 $m^2/g$.

The thick film resistor composition according to this embodiment can include silica powder in a ratio of 1 to 12 parts by mass or less when the total content of ruthenium oxide powder and glass powder is 100 parts by mass.

The inventors of the present invention studied thoroughly to make a composition for a thick film resistor that does not contain lead components and is excellent in resistance temperature coefficient and noise characteristics. As a result, by using a composition for a thick film resistor containing ruthenium oxide powder, a glass powder containing a predetermined component, and a silica powder having a predetermined specific surface area in a predetermined ratio, the resistance temperature coefficient of the thick film resistor obtained by firing the composition for the thick film resistor can be made close to zero, and the current noise can be reduced, thereby completing the present invention.

Hereinafter, the components included in the composition for the thick film resistor according to the embodiment will be described.

As described above, the composition for the thick film resistor in this embodiment does not contain a lead component. The composition for the thick film resistor that does not contain lead components mean that lead is not intentionally added, and that the lead content is zero. However, this does not preclude the inclusion of impurities or unavoidable ingredients in the manufacturing process.

(Ruthenium Oxide Powder)

In a composition for a thick film resistor that does not contain a lead component, because lead rutheniate ($Pb_2Ru_2O_{6.5}$), which is a conductive particle having a positive resistance temperature coefficient, cannot be used, the combination of a conductive powder likely to have a positive resistance temperature coefficient with glass is important.

As noted above, it is difficult to adjust the resistance temperature coefficient to positive even if using additives. Therefore, if the resistance temperature coefficient becomes excessively negative, it is difficult to adjust the resistance temperature coefficient to around zero, for example, within $\pm 100$ ppm/°C. However, if the resistance temperature coefficient is positive, it is possible to adjust the resistance temperature coefficient to around 0 with an additive such as a regulator even if the value is high.

As a conductor of a composition for a thick film resistor that does not contain lead, a ruthenium oxide powder having a stable resistance value is preferably used in a thick film resistor obtained by firing the composition for the thick film resistor.

The conductivity mechanism of the thick film resistor that mainly contains ruthenium oxide powder and glass powder is considered to be a combination of metallic conductivity of the ruthenium oxide powder, which has a positive resistance temperature coefficient, and semiconductor conductivity due to the reaction phase of the ruthenium oxide powder and the glass powder, which has a negative resistance temperature coefficient. For this reason, the resistance temperature coefficient is likely to be positive in the low resistance range where the ratio of ruthenium oxide powder is high, and the resistance temperature coefficient is likely to be negative in the high resistance range where the ratio of ruthenium oxide powder is low.

Accordingly, the inventor of the present invention further investigated a thick film resistor produced using a composition for a thick film resistor including ruthenium oxide powder and glass powder. Then, when a thick film resistor is produced using a composition for a thick film resistor including ruthenium oxide powder and glass powder, the indication is that the crystallite diameter and specific surface area diameter of the utilized ruthenium oxide powder have a certain influence on the area resistance value and the resistance temperature coefficient of the obtained thick film resistor.

Based on the subject matter described above, ruthenium oxide powder contained in the composition for a thick film resistor according to the present embodiment preferably has a predetermined range of crystallite diameter D1, a specific surface area diameter D2, and a ratio D1/D2 of the crystallite diameter to the specific surface area. By using such a ruthenium oxide powder, it is possible to particularly easily control the resistance temperature coefficient of the thick film resistor to around 0 or a positive value.

Normally, because the primary particle size of the ruthenium oxide powder used for a thick film resistor is small, the crystallites also become small, thereby reducing the number of crystal lattices that completely satisfy the Bragg conditions, and broadening the diffraction profile when irradiated with X-rays. If the grating distortion is assumed to be zero, the crystallite diameter can be measured and calculated from the following equation (A) in which the crystallite diameter is D1 (nm); the wavelength of the X-ray is $\lambda$ (nm); the diffraction profile at the 110 plane is $\beta$; and the diffraction angle is $\theta$. Incidentally, in calculating the spread $\beta$ of the diffraction line profile in (110) plane, for example, the half value width of the diffraction peak by $K\alpha1$ can be used by, for example, separating the waveform into $K\alpha1$ and $K\alpha2$ and correcting the spread caused by the optical system of the measuring instrument.

$$D1\,(\mathrm{nm}) = (K \cdot \lambda) / (\beta \cdot \cos\theta) \quad \cdot\cdot\cdot\,(A)$$

In equation (A), K is a Scherrer constant, and 0.9 can be used.

As for the ruthenium oxide ($RuO_2$) powder, the crystallite size measured by the X-ray diffraction method is approximately equal to the particle size of the primary particle when the primary particle can be regarded as an approximately single crystal. Thus, the crystallite size D1 can be referred to as the particle size of the primary particle. As for ruthenium oxide ($RuO_2$), which has a rutile crystal structure, the diffraction peaks of the (110), (101), (211), (301), and (321) planes of the crystal structure are relatively great. However, when calculating the crystallite diameter D1, the peak of (110) plane with the largest relative intensity and suitable for measurement is preferably used.

As for ruthenium oxide powder used in the composition for the thick film resistor according to the present embodiment, the crystallite diameter D1 calculated from the peak of the (110) plane measured by the X-ray diffraction method is preferably not less than 25 nm and not more than 80 nm.

In contrast, as the particle size of ruthenium oxide powder decreases, the relative surface area increases. Assuming that the particle diameter of ruthenium oxide powder is D2 (nm); the density is $\rho$ (g/cm$^3$); the relative surface area is S (m$^2$/g); and the powder is a sphere, the relationship equation shown in the following equation (B) can be established. The particle diameter calculated by this D2 is defined as a specific surface area diameter.

$$D2\,(\mathrm{nm}) = 6 \times 10^3 / (\rho \cdot S) \quad \cdot\cdot\cdot\,(B)$$

In this embodiment, the specific surface area D2 calculated by the equation (B) is preferably set to not less than 25 nm and not more than 114 nm, while setting the density of ruthenium oxide to 7.05 g/cm$^3$. That is, when the specific surface area diameter calculated from the specific surface area is D2, the ruthenium oxide powder preferably satisfies that D2 is not less than 25 nm and not more than 114 nm.

By setting the crystallite diameter D1 of the ruthenium oxide powder to 25 nm or more, it is possible to more reliably inhibit the resistance temperature coefficient of the thick film resistor from being negative. In addition, by setting the crystallite diameter D1 of the ruthenium oxide powder to 80 nm or less, it is possible to improve the voltage resistance characteristics.

Further, by setting the specific surface area D2 to 25 nm or more, when a paste for a thick film resistor containing ruthenium oxide powder and glass powder is fired to manufacture a thick film resistor using ruthenium oxide powder, it is possible to prevent the reaction between ruthenium oxide powder and the glass powder from proceeding excessively. The reaction phase between ruthenium oxide powder and glass powder has a negative resistance temperature coefficient. Therefore, it is possible to more reliably prevent the resistance temperature coefficient of the obtained thick film resistor from being negative by particularly suppressing an increase in the proportion of the reaction phase due to an excessive progress of the reaction between the ruthenium oxide powder and the glass powder.

However, if the specific surface area of the ruthenium oxide powder becomes excessively large, the contact points between the particles of ruthenium oxide, which are conductive particles, become small. Therefore, there is a concern that sufficient electric properties in current noise and the like may not be obtained due to the reduction of the conductive path. Therefore, the specific surface area D2 is preferably 114 nm or less.

As described above, the ruthenium oxide powder used in the composition for the thick film resistor according to the present embodiment preferably has a predetermined range of D1/D2, which is the ratio of the crystallite diameter D1 to the specific surface area diameter D2. In particular, D1/D2 preferably satisfies $0.70 \leqq D1/D2 \leqq 1.00$.

The crystallinity of ruthenium oxide can be increased by setting D1/D2, which is the ratio of crystallite diameter D1 to specific surface area D2, to 0.70 or more. However, when D1/D2 exceeds 1.00, coarse particles and fine particles are mixed together. Therefore, because the D1/D2 is set to be not less than 0.70 and not more than 1.00 as described above, it is particularly possible to prevent the resistance temperature coefficient of the thick film resistor including the ruthenium oxide from being negative.

As the ruthenium oxide powder used in the composition for the thick film resistor according to the present embodiment, the ruthenium oxide powder without lead component is used. The ruthenium oxide powder that does not contain a lead component means that the lead component is not intentionally added, and that the lead content is zero. However, this does not preclude the inclusion of impurities or unavoidable ingredients in the manufacturing process.

Next, an example configuration of a method of manufacturing ruthenium oxide powder used in a composition for a thick film resistor according to the present embodiment will be described.

Because the above-described ruthenium oxide powder can be manufactured by the following method of manufacturing ruthenium oxide powder, part of the description described above will be omitted.

The method of manufacturing the ruthenium oxide powder is not particularly limited, and the method capable of manufacturing the ruthenium oxide powder described above may be employed.

As the method of manufacturing ruthenium oxide powder, for example, a method of manufacturing ruthenium oxide powder by heat treating ruthenium oxide hydrate synthesized by a wet process is preferable. In such a manufacturing method, the specific surface area diameter or the crystallite diameter can be changed depending on the synthesis method or the conditions of the heat treatment.

That is, the process of manufacturing ruthenium oxide powder can include, for example, the following steps.

A process for the formation of ruthenium oxide hydrate by a wet process.

A process of collecting ruthenium oxide hydrate, which separates and recovers ruthenium oxide hydrate in a solution.

A drying process for drying ruthenium oxide hydrate.

A heat treatment process for heat treatment of ruthenium oxide hydrate.

Incidentally, conventional methods of manufacturing RuO powder, in which RuO is milled after manufacturing, are not suitable for the method of manufacturing ruthenium oxide powder used in the composition for the thick film resistor according to the present embodiment because the particle diameter is difficult to decrease and the particle diameter varies greatly.

In the step of forming ruthenium oxide hydrate, the method of synthesizing ruthenium oxide hydrate is not particularly limited, but there is a method of precipitating and depositing ruthenium oxide hydrate, for example, in an aqueous solution containing ruthenium. Specifically, for example, a method of adding ethanol to an aqueous solution of $K_2RuO_4$ to obtain a precipitate of ruthenium oxide hydrate or a method of neutralizing an aqueous solution of $RuCl_3$ with KOH to obtain a starch of ruthenium oxide.

Then, as described above, the precipitate of ruthenium oxide hydrate can be separated by solid-liquid separation, washed as necessary, and dried in the step of recovering ruthenium oxide hydrate and drying to obtain a powder of ruthenium oxide hydrate.

The conditions of the heat treatment process are not particularly limited. For example, the ruthenium oxide hydrate powder can be heat treated at a temperature of 400°C or higher in an oxidizing atmosphere to obtain crystalline water, and thus can become highly crystalline ruthenium oxide powder. Here, the oxidizing atmosphere is a gas containing not less than 10% by volume of oxygen. For example, air may be used.

By setting the temperature of the ruthenium oxide hydrate powder when the ruthenium oxide hydrate powder is heat-treated to preferably 400°C or higher as described above, the ruthenium oxide ($RuO_2$) powder having excellent crystallinity can be obtained. The upper limit of the heat treatment temperature is not particularly limited. However, if the temperature is excessively high, the crystallite diameter and specific surface area diameter of the obtained ruthenium oxide powder may be too large, or the ratio of the volatilization of ruthenium may be high as hexavalent or octavalent oxides ($RuO_3$ and $RuO_4$). Therefore, the heat treatment is preferably performed at a temperature of, for example, 1000°C or less.

In particular, the temperature at which the ruthenium oxide hydrate powder is heat treated is preferably not less than 500°C and not more than 1000°C.

As described above, the specific surface area and crystallinity of the obtained ruthenium oxide powder can be adjusted depending on the synthetic conditions when manufacturing ruthenium oxide hydrate, the conditions of heat treatment, and the like. Therefore, the conditions are preferably selected so that ruthenium oxide powder with the desired crystallite diameter and specific surface area diameter can be obtained, for example, by performing a preliminary test.

The process of making ruthenium oxide powder may have any other step than those described above.

As described above, the precipitate of ruthenium oxide hydrate can be separated by solid-liquid separation in the step of recovering ruthenium oxide hydrate, dried in the drying step, and then the resulting ruthenium oxide hydrate can be mechanically milled prior to the heat treatment step to obtain the milled ruthenium oxide hydrate powder (milling step).

When the milled ruthenium oxide powder is subjected to a heat treatment process and is heated at a temperature of 400°C or more in an oxidizing atmosphere, crystalline hydrates are obtained and crystalline properties of the ruthenium oxide powder can be increased as described above. As described above, the degree of aggregation of the ruthenium oxide hydrate powder used for the heat treatment step can be controlled and reduced by performing the milling step. Then, the milled ruthenium oxide hydrate powder can be heat-treated to suppress the formation of coarse particles and linked particles by heat-treatment. Therefore, it is possible to obtain ruthenium oxide powder having a desired crystallite diameter or specific surface area diameter even by selecting the conditions in the milling process.

The milling conditions of the milling process are not particularly limited, and it is possible to select the desired ruthenium oxide powder by performing a preliminary test or the like.

In the process of manufacturing ruthenium oxide powder, the obtained ruthenium oxide powder can be classified after the heat treatment step (classification step). By performing the classification step in this manner, it is possible to selectively recover ruthenium oxide powder having a desired specific surface area.

(Glass Powder)

The thick film resistor composition of this embodiment can contain glass powder that does not contain a lead component. Glass that does not contain the lead component means that lead is not added intentionally, and that the lead content is zero. However, this does not preclude the inclusion of impurities or unavoidable ingredients in a manufacturing process and the like.

In the glass powder of a composition for a thick film resistor that does not contain a lead component, the fluidity during firing can be adjusted by incorporating a metal oxide other than $SiO_2$, which is a principal component. $B_2O_3$ and RO (R denotes one or more alkaline earth elements selected from Ca, Sr, and Ba) may be used as metal oxides other than $SiO_2$. For RO, when R is more than two kinds, this means that two or more kinds selected from CaO, SrO, and BaO are included.

In the glass powder contained in the thick film resistor composition according to the present embodiment, when the total content of $SiO_2$, $B_2O_3$, and RO in the glass composition is 100 parts by weight, preferably, $SiO_2$ is 10 parts by weight or more and 50 parts by weight or less, $B_2O_3$ is 8 parts by weight or more and 30 parts by weight or less, and RO is 40 parts by weight or more and 65 parts by weight or less. According to the inventor of the present invention, by using the glass powder containing each component in the above-mentioned ratio, the resistance temperature coefficient is less likely to be negative when the glass powder is formed into the thick film resistor.

When the total of $SiO_2$, $B_2O_3$, and RO in the glass composition of the glass powder is 100 parts by mass, the content of $SiO_2$ is 50 parts by mass or less, thereby sufficiently increasing the flowability. However, $SiO_2$ is preferably contained at a ratio of 10 to 50 parts by mass, because glass may be difficult to be formed into when the ratio of $SiO_2$ is smaller than 10 parts by mass.

In addition, when $B_2O_3$ is made to be 8 parts by mass or more, the fluidity can be sufficiently increased, and when $B_2O_3$ is made to be 30 parts by mass or less, the weather resistance can be improved.

By setting the RO content to 40 parts by mass or more, it is possible to sufficiently inhibit the resistance temperature coefficient of the obtained thick film resistor from being negative. In addition, by setting the RO content to 65 parts by mass or less, crystallization can be inhibited and glass can be easily formed.

According to the inventor of the present invention, it is possible to obtain a thick film resistor having a resistance temperature coefficient close to 0 by using a composition for a thick film resistor including ruthenium oxide powder, glass powder containing each component in the above-described ratio, and silica powder to be described later. In addition, the composition for the thick film resistor is preferably combined with the above-described predetermined crystallite size and specific surface area of ruthenium oxide powder, because the resistance temperature coefficient of the thick film resistor using the composition for the thick film resistor can be particularly close to zero. In the composition for the thick film resistor according to the present embodiment, with regard to the thick film resistor using the thick film resistor, even in the resistance range in which the area resistance value is higher than 80 kΩ, which is difficult in the past, the resistance temperature coefficient can be made close to 0, which achieves the particular high effect.

The composition of the glass powder contained in the thick film resistor composition of this embodiment can contain other components to control the weather resistance and firing fluidity of the glass in addition to $SiO_2$, $B_2O_3$ and RO described above. Examples of optional additive ingredients include $Al_2O3$, $ZrO_2$, $TiO_2$, $SnO_2$, ZnO, $Li_2O$, $Na_2O$, $K_2O$, and the like, and one or more selected from these compounds may be added to the glass.

$Al_2O_3$ is likely to inhibit the glass phase, and $ZrO_2$ and $TiO_2$ act to improve the weather resistance of the glass. In addition, $SnO_2$, ZnO, $Li_2O$, $Na_2O$, $K_2O$ and the like have the function of increasing the flow of glass.

An index that influences the fluidity of the glass powder during firing is the softening point. Generally, when manufacturing thick film resistors, the firing temperature of the composition for the thick film resistor is between 800°C and 900°C or less.

As described above, when the firing temperature of the composition for the thick film resistor when manufacturing the thick film resistor is not less than 800°C and not more than 900°C, the softening point of the glass powder used in the composition for the thick film resistor according to this embodiment is preferably not less than 600°C and not more than 800°C, and more preferably not less than 600°C and not more than 750°C.

Here, the softening point is the peak temperature at which the glass powder is heated and increased to 10 °C/min in the atmosphere by the differential thermal analysis (TG-DTA) and the subsequent differential thermal curve of the higher temperature side decreases more than the temperature at which the decrease of the lowest temperature side of the obtained differential thermal curve occurs.

The glass powder can generally be prepared by mixing the desired ingredients or their precursors with the desired formulation, melting, quenching, and milling the resulting mixture. The melting temperature may be around 1400°C, for example, although the melting temperature is not particularly limited. In addition, the method of quenching is not particularly limited, but can be performed by pouring the molten material into cold water or flowing the molten material onto a cold belt.

While ball mills, planetary mills, bead mills, and the like may be used for glass milling, wet milling is desirable to sharpen the grain size.

Although the particle size of the glass powder is not limited, the 50% cumulative particle size of the glass powder measured by a particle size distribution meter using laser diffraction is preferably 5 $\mu$m or less, and further preferably 3 $\mu$m or less. If the grain size of the glass powder is too large, the resistance value variation of the thick film resistor increases and the load characteristic decreases. In contrast, if the grain size of the glass powder is excessively small, the productivity may be reduced and contamination with impurities or the like may be increased. Therefore, the cumulative grain size of the glass powder is preferably not less than 0.1 $\mu$m.

(Silica Powder)

Conventionally, an oxide such as $TiO_2$ may be added to the composition for the thick film resistor for the purpose of improving electric properties, such as current noise. For example, a thick film resistor obtained by firing a composition for a thick film resistor to which $TiO_2$ is added improves electric properties such as current noise, but the resistance temperature coefficient shifts to a negative side, failing to maintain 0 ppm/°C, and may be less than -100 ppm/°C.

On the other hand, according to the inventor of the present invention, when silica powder, which is amorphous silica powder, is added to the composition for a thick film resistor including the ruthenium oxide powder and the glass powder described above, the resistance value of the thick film resistor obtained after firing increases, but it is difficult to shift the resistance temperature coefficient to negative. Moreover, the electric properties such as current noise of the resistor are improved. Addition of the silica powder, which is the amorphous silica powder, enhances electric properties in the range of the glass powder compositions described above that can be used in the composition for a thick film resistor in accordance with this embodiment. If the total of $SiO_2$, $B_2O_3$, and RO contained in the glass powder is 100 parts by weight, if the $SiO_2$ content is greater than 50 parts by weight, the electric properties cannot be expected to improve even if the silica powder, which is an amorphous silica powder, is added, and the resistance temperature coefficient may shift to the negative side. In addition, when the total of $SiO_2$, $B_2O_3$, and RO contained in the glass powder is set to be 100 parts by weight, if the content of $B_2O_3$ is higher than 30 parts by weight, the electric properties cannot be expected to improve even if the silica powder, which is an amorphous silica powder, is added, and the resistance temperature coefficient may shift to the negative side. Furthermore, when the total of $SiO_2$, $B_2O_3$, and RO in the glass composition is set to 100 parts by mass, if the RO content is less than 40 parts by mass, it is not expected to improve electric properties even if silica powder, which is amorphous silica powder, is added, and the resistance temperature coefficient may shift to the negative side.

That is, in the composition for the thick film resistor according to the present embodiment, by combining the glass and the amorphous silica having a specific composition range, it is possible to improve electric properties such as current noise while maintaining the resistance temperature coefficient of the thick film resistor obtained by firing at -100 ppm/°C or more.

It is important that the specific surface area of the amorphous silica in this embodiment is not less than 60 m$^2$/g and not more than 300 m$^2$/g. By setting the specific surface area to 60 m$^2$/g or more, the electric properties of the thick film resistor fabricated using the thick film resistor composition can be improved. Further, because the specific surface area is not more than 300 m$^2$/g, it is possible to prevent the viscosity when the composition for the thick film resistor is used as the paste from being excessively high and to stabilize the viscosity.

When the total amount of the ruthenium oxide powder and the glass powder contained in the composition for the thick film resistor according to the present embodiment is 100 parts by weight, the ratio of silica powder is preferably 1 part by weight or more and 12 parts by weight or less. By setting the mass to one or more parts, it is possible to inhibit the resistance temperature coefficient of the thick film resistor manufactured using the composition for the thick film resistor from being negative, thereby sufficiently exerting an improvement effect on the electric properties. In addition, because the ratio of the silica powder to the total silica powder is 12 parts by weight or less as described above, the electric properties can be improved.

It is desirable that the current noise, which is an example of the electric properties, is low because the unit is decibels. The improvement in the noise characteristics is a shift of the current noise to the negative side, and the decrease in the noise characteristics is a shift of the current noise to the positive side.

(Makeup of Composition for Thick Film Resistor)

The ratio of the mixture of the ruthenium oxide powder and the glass powder included in the composition for the thick film resistor according to the present embodiment is not particularly limited. For example, the ratio of the ruthenium oxide powder to the glass powder can be varied depending upon the desired resistance value and the like. The ratio of silica powder can also be selected accordingly. For example, it is preferable to have a mass ratio in the range of ruthenium oxide powder: glass powder = 5:95 or more and 50:50 or less. That is, the percentage of ruthenium oxide powder among the ruthenium oxide powder and the glass powder is preferably not less than 5 wt% and not more than 50 wt%.

This is because when the sum of the ruthenium oxide powder and the glass powder contained in the composition for the thick film resistor according to the present embodiment is 100 wt%, the ratio of ruthenium oxide powder is 5 wt% or more, so that the obtained resistance value of the thick film resistor can be inhibited.

In addition, this is because when the sum of the ruthenium oxide powder and the glass powder contained in the composition for the thick film resistor according to the present embodiment is 100% by weight, by setting the ratio of ruthenium oxide powder to 50% or less, the strength of the obtained thick film resistor can be sufficiently increased, and particularly, brittleness can be prevented.

More preferably, the ratio of the ruthenium oxide powder and the glass powder in the composition for the thick film resistor according to the present embodiment is in the range of 5:95 or more and 40:60 or less of ruthenium oxide powder by mass. That is, it is more preferable that the percentage of ruthenium oxide powder among the ruthenium oxide powder and the glass powder be not less than 5 wt% and not more than 40 wt%.

The thick film resistor composition of this embodiment may further contain any ingredient as desired.

The composition for the thick film resistor according to the present embodiment may be supplemented with additives commonly used for the purpose of improving and adjusting a resistance value, a resistance temperature coefficient, load characteristics, and trimming properties. Typical additives include $Nb_2O_5$, $Ta_2O_5$, $TiO_2$, CuO, $MnO_2$, $ZrO_2$, $Al_2O_3$, $ZrSiO_4$, and the like. By using a composition for a thick film resistor to which these additives are added, the thick film resistor composition can be used to produce a thick film resistor having superior properties. The amount to be added is adjusted depending on the purpose, but when the total content of the ruthenium oxide powder and the glass powder is 100 parts by weight, the amount of these additives is preferably added in total from 0 parts by weight to 20 parts by weight or less.

[Paste for Thick Film Resistor]

A configuration example of a paste for a thick film resistor according to the present embodiment will be described.

The thick film resistor paste of this embodiment can have the aforementioned thick film resistor composition and an organic vehicle. The composition for the thick film resistor according to this embodiment can have a configuration in which the composition for the thick film resistor described above is dispersed in an organic vehicle.

The organic vehicle is not particularly limited, and a solution of one or more resins selected from the group consisting of ethyl cellulose, acrylic acid ester, methacrylic acid ester, rosin, maleic acid ester, and the like may be used as one or more solvents selected from the group consisting of terpineol, butyl carbitol, butyl carbitol acetate, and the like.

Alternatively, a dispersant or a plasticizer may be added to the paste for the thick film resistor if necessary. The aforementioned composition for the thick film resistor and the dispersion method when the additive and the like are dispersed in the organic vehicle are not particularly limited. However, one or more kinds of methods selected from the three-roll mill for dispersing the fine particles, the bead mill, the planetary mill, and the like can be used. The proportion of the organic vehicle is appropriately adjusted by a printing or coating method, but when 100 parts by weight of the composition for the thick film resistor is used, the organic vehicle can be kneaded and adjusted so as to be not less than 20 parts by weight and not more than 200 parts by weight.

[Thick Film Resistor]

The thick film resistor in this embodiment can contain the composition for the thick film resistor described above.

The method of manufacturing the thick film resistor according to this embodiment is not particularly limited, but for example, the composition for the thick film resistor described above can be formed by firing the composition for the thick film resistor on a ceramic substrate. The aforementioned paste for the thick film resistor may be applied to the ceramic substrate and then fired.

The thick film resistor according to this embodiment can be manufactured using the aforementioned composition for the thick film resistor or the paste for the thick film resistor. Thus, the thick film resistor of this embodiment can comprise the composition for the thick film resistor as described above, and can comprise ruthenium oxide powder, glass powder, and silica powder, as described above.

As described above, in the composition for the thick film resistor, the ratio of ruthenium oxide powder to the glass powder is preferably 5% to 50% by mass, and is more preferably 5% to 40% by mass.

The thick film resistor according to this embodiment can be manufactured using the composition for the thick film resistor, and the resulting glass component in the thick film resistor is derived from the glass powder of the composition for the thick film resistor. For this reason, the proportion of ruthenium oxide with respect to ruthenium oxide and glass component of the thick film resistor according to the present embodiment is preferably not less than 5 wt% and not more than 50 wt%, and more preferably not less than 5 wt% and not more than 40 wt% similar to the composition for the thick film resistor.

Although the physical properties of the thick film resistor according to this embodiment are not particularly limited, in the past, it has been particularly difficult to set the resistance temperature coefficient to around 0 when the area resistance value is high, but according to the thick film resistor according to this embodiment, even when the area resistance value is high, the resistance temperature coefficient can be close to 0, which can achieve a particularly high effect. Therefore, the area resistance value of the thick film resistor according to this embodiment is preferably high, and more preferably, for example, higher than 80 k$\Omega$.

[Example]

Although specific examples and comparative examples will be described below, the present invention is not limited to these examples.

(Evaluation Method)

First, the evaluation method in the following examples will be described.

1. Evaluation of Ruthenium Oxide Powder

The results of the evaluation of the crystallite diameter D1 and the specific surface area diameter D2 of ruthenium oxide powder a to ruthenium oxide powder d used in the following experiments were performed. Evaluation results are shown in Table 1.

(1) Crystallite Diameter

The crystallite diameter can be calculated from the spread of the peak of the X-ray diffraction pattern. Here, after the peak of the rutile structure obtained by X-ray diffraction was separated into K$\alpha$1 and K$\alpha$2 waveforms, the half-value width was measured as the spread of the peak of K$\alpha$1 corrected for the spread by the optical system of the measuring instrument, and the half-value width was calculated by the Scherrer's equation.

Specifically, when the crystallite diameter is D1 (nm), the wavelength of the X-ray is $\lambda$ (nm), the diffraction line profile at the plane 110 is $\beta$, and the diffraction angle is $\theta$, the crystallite diameter is calculated from the Scherrer's equation shown as the following equation (A) .

$$D1 (nm) = (K \cdot \lambda) / (\beta \cdot \cos\theta) \quad \cdot \cdot \cdot (A)$$

In equation (A), K is a Scherrer constant and 0.9 can be used.

(2) Specific Surface Area Diameter

The specific surface area diameter can be calculated from the specific surface area and density. The BET1 point method was used for the specific surface area, which can be easily measured. Assuming that the specific surface area is D2 (nm); the density is $\rho$ (g/cm$^3$); the specific surface area is S (m$^2$/g); and the powder is a sphere, the relation shown in equation (B) below may be established. The particle diameter calculated by this D2 is defined as the specific surface area diameter.

$$D2 (nm) = 6 \times 103/ \ (\rho \cdot S) \ \cdot \cdot \cdot (B)$$

In the calculation, the density of ruthenium oxide was set at 7.05 g/cm$^3$.

[TABLE 1]

|  | CRYSTALLITE DIAMETER D1 (nm) | SPECIFIC SURFACE AREA DIAMETER D2 (nm) | D1/D2 |
|---|---|---|---|
| RUTHENIUM OXIDE POWDER a | 25 | 35 | 0.71 |
| RUTHENIUM OXIDE POWDER b | 80 | 85 | 0.94 |
| RUTHENIUM OXIDE POWDER c | 15 | 20 | 0.75 |
| RUTHENIUM OXIDE POWDER d | 90 | 83 | 1.08 |

2. Evaluation of Glass Powder

Table 2 shows the composition of glass powder used in the following experiments and the results of the following evaluation.

(1) Softening Point, Glass Transition Point

By using the differential thermal analysis method (TG-DTA), the softening point of the glass powder was defined as the peak temperature at which the subsequent differential thermal curve of the higher temperature side decreases from the temperature at which the decrease of the lowest temperature side of the obtained differential thermal curve occurs by heating the glass powder at 10°C per minute in the atmosphere.
By using by thermomechanical analysis (TMA), the glass transition point was determined by heating the rod-shaped sample obtained by remelting the glass powder at a temperature of 10°C per minute in the atmosphere and obtaining a temperature indicating the bending point of the obtained thermal expansion curve.

(2) 50% Cumulative Grain Size

All glass powders were milled in a ball mill to a 50% cumulative grain size of not less than 1.3 um and not more than 1.5 $\mu$m. The 50% cumulative particle size is measured by a particle size distributor using laser diffraction and means the particle size at a cumulative value of 50%.

[Table 2]

| | GLASS COMPOSITION (MASS%) | | | | | | | | | | CONTENT OF EACH INGREDIENT (PARTS BY MASS) WHEN TOTAL CONTENT OF $SiO_2$, $B_2O_3$, AND RO IS 100 PARTS BY MASS | | | GLASS TRANSITION POINT (°C) | SOFTENING POINT (°C) | 50% CUMULATIVE GRAIN SIZE ($\mu$m) |
| | $SiO_2$ | $B_2O_3$ | RO | | | $Al_2O_3$ | ZnO | $Na_2O$ | $K_2O$ | TOTAL | $SiO_2$ | $B_2O_3$ | RO | | | |
| | | | CaO | SrO | BaO | | | | | | | | | | | |
|---|---|---|---|---|---|---|---|---|---|---|---|---|---|---|---|---|
| GLASS POWDER A | 16 | 20 | 0 | 0 | 58 | 5 | 0 | 0.5 | 0.5 | 100 | 17 | 21 | 62 | 600 | 690 | 1.8 |
| GLASS POWDER B | 36 | 10 | 5 | 0 | 33 | 0 | 16 | 0 | 0 | 100 | 43 | 12 | 45 | 640 | 750 | 1.2 |
| GLASS POWDER C | 20 | 24 | 0 | 0 | 50 | 6 | 0 | 0 | 0 | 100 | 21 | 26 | 53 | 680 | 730 | 3.0 |
| GLASS POWDER D | 40 | 14 | 8 | 0 | 32 | 6 | 0 | 0 | 0 | 100 | 43 | 15 | 43 | 680 | 800 | 1.5 |
| GLASS POWDER E | 19 | 14 | 5 | 10 | 40 | 0 | 12 | 0 | 0 | 100 | 22 | 16 | 63 | 590 | 690 | 1.5 |
| GLASS POWDER F | 43 | 5 | 6 | 0 | 28 | 3 | 15 | 0 | 0 | 100 | 52 | 6 | 41 | 650 | 760 | 1.4 |
| GLASS POWDER G | 20 | 30 | 0 | 0 | 42 | 8 | 0 | 0 | 0 | 100 | 22 | 33 | 46 | 620 | 740 | 5.1 |
| GLASS POWDER H | 42 | 6 | 5 | 0 | 25 | 6 | 16 | 0 | 0 | 100 | 54 | 8 | 38 | 650 | 770 | 1.7 |

3. Evaluation of Silica Powder

In the following examples, amorphous silica powder was used as silica powder.

As shown in Table 3, four types of silica powders with different specific surface areas were used in each experiment.

The specific surface area of each silica powder was measured by the BET method.

4. Evaluation of Thick Film Resistors

The thick film resistors produced in the following examples were evaluated with respect to film thicknesses, area resistance values, resistance temperature coefficients from 25°C to -55°C (COLD-TCR), resistance temperature coefficients from 25°C to 125°C (HOT-TCR), and current noises as indicators of electric properties. In Table 4, COLD-TCR is expressed as C-TCR, and HOT-TCR is expressed as H-TCR.

(1) Film Thickness

The film thickness was calculated by measuring the thickness of the five thick film resistors produced in the same manner in each experiment using a tactile thickness gauge (model number: SurfCom480B, made by Tokyo Seimitsu Co., Ltd) and averaging the measured value.

(2) Area Resistance Value

The area resistance value was calculated by averaging the resistance value of the 25 thick film resistors produced in the same manner in each experiment using a digital multimeter (2001, KEITHLEY EQUIPMENT).

(3) Temperature Coefficient of Zero Power Resistance

In the resistance temperature coefficient, five thick film resistors made in the same manner in each experimental example were maintained at -55°C, 25°C, and 125°C for 15 minutes, respectively, and the resistance values at each temperature of the thick film resistors were measured, and the resistance values at each temperature were made $R_{-55}$, $R_{25}$, and $R_{125}$. Then, COLD-TCR and HOT-TCR were calculated for each thick film resistor using the following equations (C) and (D), and the average of the five thick film resistors was set as the resistance temperature coefficient (COLD-TCR, HOT-TCR) of the thick film resistor in each experiment. It is desirable that the resistance temperature coefficient should be close to 0, and it is considered that -100 ppm/°C $\leq$ resistance temperature coefficient $\leq$ 100 ppm/°C is a guideline for an excellent resistor.

$$COLD\text{—}TCR\,(ppm/°C) = (R_{-55} - R_{25}) \; / \; R_{25} \; / \; (-80) \times 10^6 \; \cdot \cdot \cdot \; (C)$$

$$HOT\text{—}TCR\,(ppm/°C) = (R_{125} - R_{25}) \; / \; R_{25} \; / \; (100) \times 10^6 \; \cdot \cdot \cdot \; (D)$$

(4) Current Noise

Current noise was measured as an indicator of the electric properties of the thick film resistors in each experiment. Current noise was measured using a noise meter (Model: 315c, made by Quan-Tech) and a voltage equivalent to 1/10 W was applied. The current noise of the thick film resistor is related to overload characteristics and reliability, and the lower the value, the better the electric properties of the resistor.

Hereinafter, the conditions for making the composition for the thick film resistor, the paste for the thick film resistor, and the thick film resistor in each experimental example will be described. Experimental example 1 to experimental example 12 are working examples, and experimental example 13 to experimental example 27 are comparative examples.

[Experimental Example 1]

(Preparation of Compositions for Heavy Film Resistors)

In the experiment example 1, as shown in Table 3, a composition for a thick film resistor was prepared by mixing 20 parts by weight of ruthenium oxide powder a, 80 parts by weight of glass powder A, and 5 parts by weight of silica powder. As for the silica powder, a specific surface area of 60 $m^2/g$ was used as shown in Table 3. In addition, the ratio of ruthenium oxide powder to glass powder was adjusted so that the area resistance value of the thick film resistor was about 100 kΩ.

(Preparation of Thick Film Resistor Paste)

A thick film resistor paste was prepared by weighing 43 parts by weight of an organic vehicle with respect to 100 parts by weight of a total of 100 parts by weight of ruthenium oxide powder and glass powder contained in the prepared thick film resistor composition, and dispersed in 3 roll mills in the organic vehicle.

(Preparation of Thick Film Resistors)

The prepared thick film resistor paste was printed on an electrode of 1wt% Pd and 99wt% Ag, which was formed by firing onto an alumina substrate, and dried at 150°C for 5 minutes. Then, a thick film resistor was formed by firing so that the peak temperature was 850°C; the retention time at the peak temperature was 9 minutes; and the total firing time was 30 minutes.

The size of the thick film resistor was 1.0 mm in width and 1.0 mm in length (between electrodes).

Table 4 shows the evaluation results of the thick film resistor.

[Experimental Example 2 to Experimental Example 27]

When preparing the composition for the thick film resistor, powders composed of the amounts of ruthenium oxide powder, glass powder, and silica powder as shown in Table 3, were used, and the compositions for each thick film resistor was prepared in the same manner as Experimental Example 1 except that the powders were weighed and mixed so as to become the compounding ratio shown in Table 3.

In addition, the paste for the thick film resistor and the thick film resistor were manufactured in the same manner as the experimental example 1 except that the composition for the thick film resistor was manufactured in each experimental example, and the thick film resistor was evaluated. The evaluation results are shown in Table 4.

As described above, the physical properties of ruthenium oxide powder used in each experiment are shown in Table 1, and the composition and physical properties of glass powder are shown in Table 2. As for silica powder, the specific surface area shown in Table 3 is used. For example, in the experimental example 2, 1 part by weight of silica powder has a specific surface area of 200 $m^2/g$, and in the experimental example 4, 5 part by weight of silica powder has a specific surface area of 300 $m^2/g$.

EP 3 832 674 B1

[Table 3]

| | COMPOSITION FOR THICK FILM RESISTOR | | | | | | | |
| | | | COMPOSITION (PARTS BY MASS) | | | | | |
| | TYPE OF USED RUTHENIUM OXIDE POWDER | TYPE OF USED GLASS POWDER | RUTHENIUM OXIDE POWDER | GLASS POWDER | SILICA POWDER | | | |
| | | | | | 60 m²/g | 200 m²/g | 300 m²/g | 4 m²/g |
|---|---|---|---|---|---|---|---|---|
| EXPERIMENTAL EXAMPLE 1 | RUTHENIUM OXIDE POWDER a | GLASS POWDER A | 20 | 80 | 5 | - | - | - |
| EXPERIMENTAL EXAMPLE 2 | RUTHENIUM OXIDE POWDER a | GLASS POWDER A | 18 | 82 | - | 1 | - | - |
| EXPERIMENTAL EXAMPLE 3 | RUTHENIUM OXIDE POWDER a | GLASS POWDER A | 20 | 80 | - | 5 | - | - |
| EXPERIMENTAL EXAMPLE 4 | RUTHENIUM OXIDE POWDER a | GLASS POWDER A | 20 | 80 | - | - | 5 | - |
| EXPERIMENTAL EXAMPLE 5 | RUTHENIUM OXIDE POWDER a | GLASS POWDER A | 24 | 76 | - | 12 | - | - |
| EXPERIMENTAL EXAMPLE 6 | RUTHENIUM OXIDE POWDER a | GLASS POWDER B | 17 | 83 | - | 5 | - | - |
| EXPERIMENTAL EXAMPLE 7 | RUTHENIUM OXIDE POWDER a | GLASS POWDER C | 15 | 85 | - | 5 | - | - |
| EXPERIMENTAL EXAMPLE 8 | RUTHENIUM OXIDE POWDER a | GLASS POWDER D | 17 | 83 | - | - | 10 | - |
| EXPERIMENTAL EXAMPLE 9 | RUTHENIUM OXIDE POWDER a | GLASS POWDER E | 21 | 79 | - | 10 | - | - |
| EXPERIMENTAL EXAMPLE 10 | RUTHENIUM OXIDE POWDER b | GLASS POWDER A | 17 | 83 | - | 10 | - | - |
| EXPERIMENTAL EXAMPLE 11 | RUTHENIUM OXIDE POWDER b | GLASS POWDER B | 15 | 85 | 10 | - | - | - |
| EXPERIMENTAL EXAMPLE 12 | RUTHENIUM OXIDE POWDER d | GLASS POWDER E | 20 | 80 | - | 10 | - | - |
| EXPERIMENTAL EXAMPLE 13 | RUTHENIUM OXIDE POWDER a | GLASS POWDER A | 18 | 82 | - | - | - | - |

(continued)

| | | | COMPOSITION FOR THICK FILM RESISTOR | | | | | |
| | | | | COMPOSITION (PARTS BY MASS) | | | | |
| | TYPE OF USED RUTHENIUM OXIDE POWDER | TYPE OF USED GLASS POWDER | RUTHENIUM OXIDE POWDER | GLASS POWDER | SILICA POWDER | | | |
| | | | | | 60 m²/g | 200 m²/g | 300 m²/g | 4 m²/g |
|---|---|---|---|---|---|---|---|---|
| EXPERIMENTAL EXAMPLE 14 | RUTHENIUM OXIDE POWDER a | GLASS POWDER B | 14 | 86 | - | - | - | - |
| EXPERIMENTAL EXAMPLE 15 | RUTHENIUM OXIDE POWDER a | GLASS POWDER C | 16 | 84 | - | - | - | - |
| EXPERIMENTAL EXAMPLE 16 | RUTHENIUM OXIDE POWDER a | GLASS POWDER D | 14 | 86 | - | - | - | - |
| EXPERIMENTAL EXAMPLE 17 | RUTHENIUM OXIDE POWDER a | GLASS POWDER E | 18 | 82 | - | - | - | - |
| EXPERIMENTAL EXAMPLE 18 | RUTHENIUM OXIDE POWDER b | GLASS POWDER B | 12 | 88 | - | - | - | - |
| EXPERIMENTAL EXAMPLE 19 | RUTHENIUM OXIDE POWDER a | GLASS POWDER F | 15 | 85 | - | 10 | - | - |
| EXPERIMENTAL EXAMPLE 20 | RUTHENIUM OXIDE POWDER a | GLASS POWDER G | 15 | 85 | - | 10 | - | - |
| EXPERIMENTAL EXAMPLE 21 | RUTHENIUM OXIDE POWDER a | GLASS POWDER H | 13 | 87 | - | 10 | - | - |
| EXPERIMENTAL EXAMPLE 22 | RUTHENIUM OXIDE POWDER a | GLASS POWDER E | 21 | 79 | - | - | - | 10 |
| EXPERIMENTAL EXAMPLE 23 | RUTHENIUM OXIDE POWDER c | GLASS POWDER G | 13 | 87 | - | 10 | - | - |
| EXPERIMENTAL EXAMPLE 24 | RUTHENIUM OXIDE POWDER d | GLASS POWDER G | 13 | 87 | - | 10 | - | - |
| EXPERIMENTAL EXAMPLE 25 | RUTHENIUM OXIDE POWDER a | GLASS POWDER F | 12 | 88 | - | - | - | - |

(continued)

| | COMPOSITION FOR THICK FILM RESISTOR | | | | | | | |
| | | | COMPOSITION (PARTS BY MASS) | | | | | |
| | TYPE OF USED RUTHENIUM OXIDE POWDER | TYPE OF USED GLASS POWDER | RUTHENIUM OXIDE POWDER | GLASS POWDER | SILICA POWDER | | | |
| | | | | | 60 m²/g | 200 m²/g | 300 m²/g | 4 m²/g |
| EXPERIMENTAL EXAMPLE 26 | RUTHENIUM OXIDE POWDER a | GLASS POWDER G | 12 | 89 | - | - | - | - |
| EXPERIMENTAL EXAMPLE 27 | RUTHENIUM OXIDE POWDER a | GLASS POWDER H | 11 | 89 | - | - | - | - |

[Table 4]

| | FILM THICKNESS | AREA RESISTANCE VALUE | TEMPERATURE COEFFICIENT OF ZERO POWER RESISTANCE | | CURRENT NOISE |
|---|---|---|---|---|---|
| | EVALUATION RESULTS OF THICK FILM RESISTOR | | | | |
| | | | C-TCR | H-TCR | |
| | (μm) | (kΩ) | (ppm/°C) | (ppm/°C) | (dB) |
| EXPERIMENTAL EXAMPLE 1 | 7 | 93 | 43 | 78 | -1 |
| EXPERIMENTAL EXAMPLE 2 | 7 | 100 | 75 | 100 | -2 |
| EXPERIMENTAL EXAMPLE 3 | 7 | 105 | 22 | 54 | -6 |
| EXPERIMENTAL EXAMPLE 4 | 7 | 108 | 14 | 49 | -5 |
| EXPERIMENTAL EXAMPLE 5 | 6.5 | 110 | 10 | 47 | -8 |
| EXPERIMENTAL EXAMPLE 6 | 6.5 | 105 | -45 | 0 | -5 |
| EXPERIMENTAL EXAMPLE 7 | 7 | 110 | 11 | 49 | -2 |
| EXPERIMENTAL EXAMPLE 8 | 7 | 105 | -43 | -7 | -7 |
| EXPERIMENTAL EXAMPLE 9 | 7 | 85 | 71 | 98 | -8 |
| EXPERIMENTAL EXAMPLE 10 | 7 | 100 | -50 | -5 | -6 |
| EXPERIMENTAL EXAMPLE 11 | 6.5 | 100 | -75 | -38 | -4 |
| EXPERIMENTAL EXAMPLE 12 | 6.5 | 104 | -80 | -25 | -2 |
| EXPERIMENTAL EXAMPLE 13 | 7 | 88 | 95 | 127 | 8 |
| EXPERIMENTAL EXAMPLE 14 | 6.5 | 110 | -35 | 6 | 3 |
| EXPERIMENTAL EXAMPLE 15 | 7 | 101 | 35 | 78 | 3 |
| EXPERIMENTAL EXAMPLE 16 | 7 | 106 | -8 | 37 | 3 |
| EXPERIMENTAL EXAMPLE 17 | 7 | 85 | 71 | 98 | 3 |
| EXPERIMENTAL EXAMPLE 18 | 6.5 | 107 | -65 | -22 | 4 |
| EXPERIMENTAL EXAMPLE 19 | 6.5 | 98 | -185 | -137 | 5 |
| EXPERIMENTAL EXAMPLE 20 | 6.5 | 100 | -166 | -111 | 5 |

(continued)

| | EVALUATION RESULTS OF THICK FILM RESISTOR | | | | |
| | FILM THICKNESS | AREA RESISTANCE VALUE | TEMPERATURE COEFFICIENT OF ZERO POWER RESISTANCE | | CURRENT NOISE |
| | | | C-TCR | H-TCR | |
| | ($\mu$m) | (k$\Omega$) | (ppm/°C) | (ppm/°C) | (dB) |
| EXPERIMENTAL EXAMPLE 21 | 7 | 110 | -204 | -142 | 4 |
| EXPERIMENTAL EXAMPLE 22 | 7 | 80 | 90 | 108 | 3 |
| EXPERIMENTAL EXAMPLE 23 | 7.5 | 100 | -522 | -403 | -4 |
| EXPERIMENTAL EXAMPLE 24 | 6.5 | 95 | -193 | -118 | -2 |
| EXPERIMENTAL EXAMPLE 25 | 6.5 | 98 | -105 | -79 | 6 |
| EXPERIMENTAL EXAMPLE 26 | 6.5 | 102 | -108 | -81 | 5 |
| EXPERIMENTAL EXAMPLE 27 | 7 | 100 | -149 | -112 | 8 |

According to Table 4, from the experimental example 1 to the experimental example 12, the resistance temperature coefficient was ±100 ppm/°C and the current noise was -1 dB or less. Therefore, that is the indication that the composition for the resistor without the lead component having the excellent resistance temperature coefficient and the noise characteristic was obtained as the thick film resistor.

In contrast, in the thick film resistors using the composition for the thick film resistors of the experimental examples 13 to 22, the current noise was not less than 3 dB, and thus indicating that the obtained thick film resistor did not have good electric properties.

In addition, although the current noise of the thick film resistor using the composition for the thick film resistor of the experiment examples 23 and 24 was small, the resistance temperature coefficient was negative and did not fall within ±100 ppm/°C. In other words, in the experimental example 23 and the experimental example 24, the characteristics of the resistance temperature coefficient were inferior.

The experimental example 25 to the experimental example 27 indicated that both the resistance temperature coefficient and the electrical noise characteristics were inferior because no silica powder was added.

The above-described experimental results have indicated that the resistance temperature coefficient of the thick film resistor, which is difficult to adjust in the past, can be easily adjusted within ±100 ppm/°C by using a composition for a thick film resistor containing ruthenium oxide powder, a glass powder of a predetermined composition, and a silica powder of a predetermined specific surface area at a predetermined ratio. Furthermore, that is the indication that the thick film resistor has excellent electric properties and, in particular, noise properties.

As described above, although a composition for a thick film resistor, a paste for a thick film resistor, and a thick film resistor have been described in the embodiments and the examples, the present invention is not limited to the above-described embodiments and the examples. Various modifications and variations are possible within the scope of the invention as defined in the claims.

**Claims**

1. A composition for a thick film resistor, comprising:

   a ruthenium oxide powder;
   a glass powder; and
   a silica powder,

wherein the composition does not include a lead component,
wherein the glass powder contains $SiO_2$, $B_2O_3$, and RO (where R represents one or more alkaline earth elements selected from Ca, Sr, and Ba), wherein when a total content of the $SiO_z$, the $B_2O_3$, and the RO is 100 parts by mass, the glass powder contains 10 parts by mass to 50 parts by mass of the $SiO_z$, 8 parts by mass to 30 parts by mass of the $B_2O_3$, and 40 parts by mass to 65 parts by mass of the RO,
wherein the silica powder is an amorphous silica powder having a specific surface area of not less than 60 m$^2$/g and not more than 300 m$^2$/g when measured by the BET method, and
wherein the ruthenium oxide powder satisfies, when a crystallite diameter calculated from a peak of a (110) plane measured by an X-ray diffraction method is D1, and a specific surface area diameter calculated from the specific surface area is D2, 25 nm $\leq$ D1 $\leq$ 80 nm, 25 nm $\leq$ D2 $\leq$ 114 nm, and 0.70 $\leq$ D1/D2 $\leq$ 1.00, and
wherein when a total content of the ruthenium oxide powder and the glass powder is 100 parts by weight, the composition for the thick film resistor contains 1 to 12 parts by mass of the silica powder.

2. The composition for the thick film resistor as claimed in claim 1, wherein a proportion of the ruthenium oxide powder with respect to the ruthenium oxide powder and the glass powder is 5 wt% or more and 50 wt% or less.

3. The composition for the thick film resistor as claimed in claim 1, wherein the glass powder has a 50% cumulative grain size of 5 $\mu$m or less.

4. The composition for the thick film resistor as claimed in claim 2, wherein the glass powder has a 50% cumulative grain size of 5 $\mu$m or less.

5. A thick film resistor paste wherein the composition for the thick film resistor according to any of claims 1-4 is dispersed in an organic vehicle.

6. A thick film resistor including the composition for the thick film resistor as claimed in any of claims 1 to 4.


**Patentansprüche**

1. Zusammensetzung für einen Dickschichtwiderstand, umfassend:

   - ein Rutheniumoxid-Pulver;
   - ein Glaspulver und
   - ein Siliziumdioxid-Pulver,

      - wobei die Zusammensetzung keine Bleikomponente enthält,
      - wobei das Glaspulver $SiO_2$, $B_2O_3$ und RO enthält (wobei R ein oder mehrere Erdalkalielemente, ausgewählt aus Ca, Sr und Ba, darstellt), wobei, wenn ein Gesamtgehalt des $SiO_2$, des $B_2O_3$ und des RO 100 Masseteile beträgt, das Glaspulver 10 Masseteile bis 50 Masseteile des $SiO_2$, 8 Masseteile bis 30 Masseteile des $B_2O_3$ und 40 Masseteile bis 65 Masseteile des RO enthält,
      - wobei das Siliziumdioxid-Pulver ein amorphes Siliziumdioxid-Pulver mit einer spezifischen Oberfläche von nicht weniger als 60 m$^2$/g und nicht mehr als 300 m$^2$/g, gemessen nach dem BET-Verfahren, ist und
      - wobei für das Rutheniumoxid-Pulver, wenn ein Kristallitdurchmesser, der aus einem Peak einer (110)-Ebene, gemessen mittels eines Röntgenbeugungsverfahrens, berechnet wird, D1 ist, und ein spezifischer Oberflächendurchmesser, der aus der spezifischen Oberfläche berechnet wird, D2 ist, gilt: 25 nm $\leq$ DI $\leq$ 80 nm, 25 nm $\leq$ D2 $\leq$ 114 nm und 0,70 $\leq$ D1/D2 $\leq$ 1,00 und
      - wobei, wenn der Gesamtgehalt des Rutheniumoxid-Pulvers und des Glaspulvers 100 Gewichtsteile beträgt, die Zusammensetzung für den Dickschichtwiderstand 1 bis 12 Masseteile des Siliziumdioxid-Pulvers enthält.

2. Zusammensetzung für den Dickschichtwiderstand nach Anspruch 1, wobei ein Anteil des Rutheniumoxid-Pulvers in Bezug auf das Rutheniumoxid-Pulver und das Glaspulver 5 Gew.- % oder mehr und 50 Gew.-% oder weniger beträgt.

3. Zusammensetzung für den Dickschichtwiderstand nach Anspruch 1, wobei das Glaspulver eine 50%ige kumulative Korngröße von 5 $\mu$m oder weniger aufweist.

4. Zusammensetzung für den Dickschichtwiderstand nach Anspruch 2, wobei das Glaspulver eine 50%ige kumulative Korngröße von 5 $\mu$m oder weniger aufweist.

5. Dickschichtwiderstandspaste,
   wobei die Zusammensetzung für den Dickschichtwiderstand nach einem der Ansprüche 1-4 in einem organischen Träger dispergiert ist.

6. Dickschichtwiderstand, der die Zusammensetzung für den Dickschichtwiderstand nach einem der Ansprüche 1 bis 4 enthält.


**Revendications**

1. Composition pour une résistance à film épais, comprenant :

   une poudre d'oxyde de ruthénium ;
   une poudre de verre ; et
   une poudre de silice,
   dans laquelle la composition n'inclut pas de composant de plomb,
   dans laquelle la poudre de verre contient du $SiO_2$, du $B_2O_3$ et du RO (où R représente un ou plusieurs éléments alcalino-terreux choisis parmi Ca, Sr et Ba), dans laquelle lorsqu'une teneur totale du $SiO_z$, du $B_2O_3$ et du RO est de 100 parties en masse, la poudre de verre contient de 10 parties en masse à 50 parties en masse de $SiO_2$, de 8 parties en masse à 30 parties en masse de $B_2O_3$, et de 40 parties en masse à 65 parties en masse de RO,
   dans laquelle la poudre de silice est une poudre de silice amorphe présentant une surface spécifique d'au moins 60 m$^2$/g et d'au plus 300 m$^2$/g lorsqu'elle est mesurée par le procédé BET, et
   dans laquelle la poudre d'oxyde de ruthénium satisfait, lorsqu'un diamètre de cristallite calculé à partir d'un pic d'un plan (110) mesuré par un procédé de diffraction de rayons X est D1, et un diamètre de surface spécifique calculé à partir de la surface spécifique est D2, 25 nm $\leq$ D1 $\leq$ 80 nm, 25 nm $\leq$ D2 $\leq$ 114 nm, et 0,70 $\leq$ D1/D2 $\leq$ 1,00, et
   dans laquelle, lorsqu'une teneur totale de la poudre d'oxyde de ruthénium et de la poudre de verre est de 100 parties en poids, la composition pour la résistance à film épais contient 1 à 12 parties en masse de la poudre de silice.

2. Composition pour la résistance à film épais selon la revendication 1, dans laquelle une proportion de la poudre d'oxyde de ruthénium par rapport à la poudre d'oxyde de ruthénium et à la poudre de verre est de 5 % en poids ou plus et de 50 % en poids ou moins.

3. Composition pour la résistance à film épais selon la revendication 1, dans laquelle la poudre de verre présente une taille de grain cumulative de 50 % de 5 $\mu$m ou moins.

4. Composition pour la résistance à film épais selon la revendication 2, dans laquelle la poudre de verre présente une taille de grain cumulative de 50% de 5 $\mu$m ou moins.

5. Pâte de résistance à film épais dans laquelle la composition pour la résistance à film épais selon l'une quelconque des revendications 1 à 4 est dispersée dans un véhicule organique.

6. Résistance à film épais incluant la composition pour la résistance à film épais selon l'une quelconque des revendications 1 à 4.

**EP 3 832 674 B1**

**REFERENCES CITED IN THE DESCRIPTION**

**Patent documents cited in the description**

- JP 2005129806 A
- JP 2003007517 A
- JP 8253342 A
- JP 2007103594 A
- JP 2018067478 A